# EUROPÄISCHE PATENTSCHRIFT

(11) **EP 1 144 958 B1**
(45) Veröffentlichungstag und Bekanntmachung des Hinweises auf die Patenterteilung: **24.03.2004**
(21) Anmeldenummer: 99973495.7
(22) Anmeldetag: 08.12.1999
(51) Int. Cl.: G01F 1/698

(54) **VERFAHREN UND SENSOR ZUR MESSUNG EINES MASSENFLUSSES**
METHOD AND SENSOR FOR MEASURING A MASS FLOW
PROCEDE ET CAPTEUR POUR MESURER UN FLUX MASSIQUE

(30) Priorität: 22.12.1998 CH 253598
(43) Veröffentlichungstag der Anmeldung: 17.10.2001
(73) Patentinhaber: Sensirion AG, 8052 Zürich (CH)
(72) Erfinder: MAYER, Felix, CH-8057 Zürich (CH); LECHNER, Moritz, CH-8057 Zürich (CH)
(74) Vertreter: Blum, Rudolf Emil Ernst
(86) Internationale Anmeldenummer: PCT/IB1999/001953
(87) Internationale Veröffentlichungsnummer: WO 2000/037895

(56) Entgegenhaltungen:
- EP-A- 0 698 786
- US-A- 4 651 564

## Beschreibung

### Hinweis auf verwandte Anmeldungen

Diese Anmeldung beansprucht die Priorität der Schweizer Patentanmeldung 2535/98, die am 22. Dezember 1998 eingereicht wurde und deren ganze Offenbarung hiermit durch Bezug aufgenommen wird.

### Hintergrund

Die Erfindung betrifft ein Verfahren und einen Sensor zum Messen des Massenflusses eines Gases oder einer Flüssigkeit gemäss Oberbegriff der unabhängigen Ansprüche.

Vorrichtungen dieser Art werden in "Scaling of Thermal CMOS Gas Flow Microsensors: Experiment and Simulation" von F. Mayer et al., in Proc. IEEE Micro Electro Mechanical Systems, (IEEE, 1996), pp. 116ff oder in "Single-Chip CMOS Anemometer", F. Mayer et al., Proc. IEEE International Electron Devices Meeting (IEDM, 1997), pp. 895ff, beschrieben. Sie werden verwendet, um den Massenfluss von Gasen oder Flüssigkeiten zu bestimmen. Sie besitzen ein Heizelement, welches zwischen zwei Temperatursensoren angeordnet ist. Die Temperaturdifferenz zwischen den beiden Temperatursensoren ist ein Mass für den Massenfluss.

Derartige Sensoren besitzen eine relativ grosse Leistungsaufnahme. Man versucht deshalb, den Strom durch das Heizelement möglichst klein zu halten, was jedoch auf Kosten der Messgenauigkeit geht.

US 4 651 564 beschreibt einen Sensor, bei welchem das Heizelement gepulst betrieben wird, wobei die Pulse so lange wie die Pausen zwischen den Pulsen sind. Dieser gepulste Betrieb dient zur Erhöhung der Messgenauigkeit. Eine Reduktion der Leistungsaufnahme ist jedoch nicht Gegenstand dieses Dokuments.

EP-A-698 786 beschreibt ein Gerät, welches ein mit unterschiedlichen Heizströmen betriebenes Heizelement aufweist. Das Heizelement dient gleichzeitig als Temperatursensor. Messungen bei unterschiedlichen Heizströmen werden benötigt, um den zu messenden Fluss zu ermitteln.

### Darstellung der Erfindung

Es stellt sich somit die Aufgabe, einen Sensor bzw. ein Verfahren der eingangs genannten Art bereitzustellen, der bzw. das mit einem geringen Stromverbrauch auskommt.

Diese Aufgabe wird vom Gegenstand der unabhängigen Ansprüche gelöst.

Erfindungsgemäss wird das Heizelement also zyklisch betrieben, wobei es in einer ersten, kürzeren Zyklusphase mehr beheizt wird als in einer zweiten, längeren Zyklusphase. So kann es z.B. in der zweiten Zyklusphase ausgeschaltet bleiben oder mit einer geringeren Leistung versorgt werden.

Durch diesen gepulsten Betrieb kann der Leistungsverbrauch wesentlich reduziert werden. Dennoch bleibt es möglich, durch Auswertung der beiden Sensorsignale den Massenfluss zu ermitteln. Vorzugsweise wird hierzu die Pulslänge bzw. die Einschaltzeit des Heizelements so gewählt, dass sich ein thermisches Gleichgewicht einstellt und der Massenfluss im wesentlichen in konventioneller Weise ermittelt werden kann.

In einer bevorzugten Ausführung ist der Sensor mit einer Überwachungsschaltung ausgerüstet, die periodisch die Temperatursignale prüft. Sobald diese Temperatursignale eine vorgegebene Schwellbedingung erfüllen, wird eine Messschaltung in Betrieb gesetzt, welche den Massenfluss genau ermittelt. Dadurch kann der Leistungsbedarf weiter reduziert werden.

Vorzugsweise sind verschiedene Betriebsmodi vorgesehen. In einem ersten Modus mit verringerter Stromaufnahme werden nur sehr kurze Heizpulse erzeugt, während die Pulse im zweiten Heizmodus länger sind. Dies erlaubt es, bei Bedarf einen Betriebsmodus mit geringerer Leistungsaufnahme verwenden. Zwar sind in diesem Betriebsmodus nur Messungen reduzierter Genauigkeit möglich, für viele Anwendungen reicht dies jedoch völlig aus. Der Betriebsmodus mit grösserer Leistungsaufnahme wird lediglich verwendet, wenn Messungen höherer Genauigkeit notwendig sind.

Vorzugsweise sind die Heizpulse mindestens fünf mal, vorzugsweise mindestens zehn mal, kürzer als die der Abstand zwischen aufeinander folgenden Heizpulse.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine perspektivische, in der Mitte geschnittene Ansicht der Anordnung des Heizelements und der Temperatursensoren,
Fig. 2 ein vereinfachtes Blockdiagramm einer ersten Ausführung des erfindungsgemässen Fluss-Sensors,
Fig. 3 ein Diagramm mit dem Heizstrom und den Signalen der Temperatursensoren und
Fig. 4 eine zweite Ausführung eines erfindungsgemässen Fluss-Sensors.

### Wege zur Ausführung der Erfindung

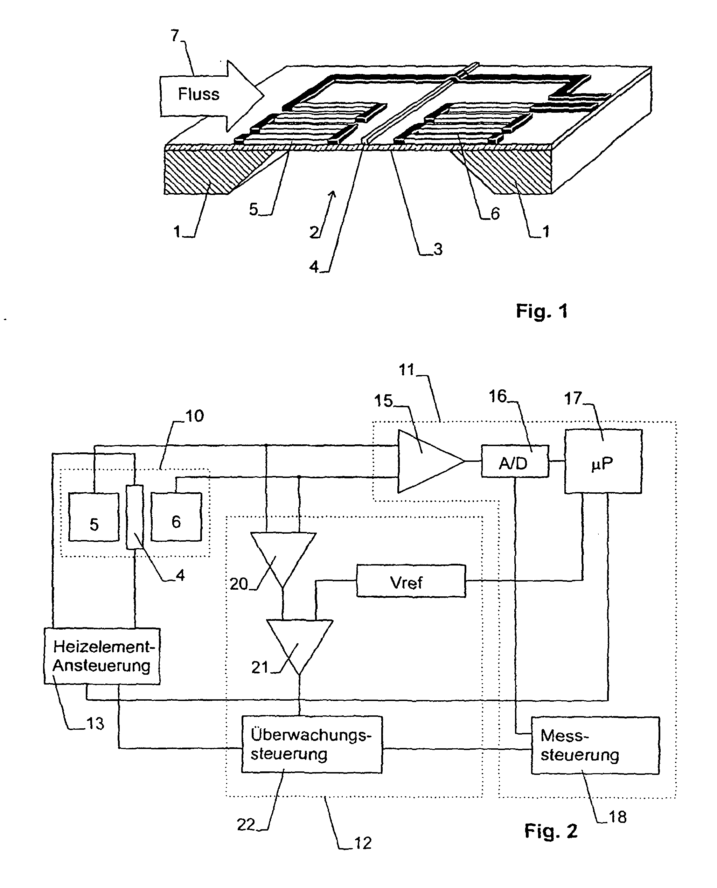

In einer bevorzugten Ausführung des erfindungsgemässen Fluss-Sensors wird ein Sensor-Bauelement verwendet, wie es in Fig. 1 dargestellt ist. Dieses Bauelement ist ausführlich in "Scaling of Thermal CMOS Gas Flow Microsensors: Experiment and Simulation" von F. Mayer et al., in Proc. IEEE Micro Electro Mechanical Systems, (IEEE, 1996), pp. 116ff beschrieben.

Es ist auf einem Silizium-Einkristall 1 angeordnet, in welchem eine Öffnung oder Vertiefung 2 ausgeätzt wurde. Die Öffnung bzw. Vertiefung 2 wird von einer dünnen Membran 3 aus einem Dielektrikum überspannt. Auf der Membran 3 ist ein Widerstands-Heizelement 4 angeordnet. Symmetrisch zum Heizelement 4 sind zwei Thermoelemente 5, 6 vorgesehen, die als Temperatursensoren dienen. Die Thermoelemente 5, 6 und das Heizelement 4 liegen so zur Flussrichtung 7, dass das zu messende Medium zuerst das erste Thermoelement 5, dann das Heizelement 4 und schliesslich das zweite Thermoelement 6 überstreicht.

Wie im oben erwähnten Dokument beschrieben, kann mit einer Vorrichtung gemäss Fig. 1 der Massenfluss des zu messenden Mediums ermittelt werden. Hierzu wird die Temperaturdifferenz zwischen den Thermoelementen 5, 6 gemessen, welche sowohl von der Flussgeschwindigkeit als auch von der Dichte bzw. dem Druck im Medium abhängt. Mittels geeigneter Eichtabellen kann aus der Temperaturdifferenz sodann der Massenfluss berechnet werden.

Zur Messung des Massenflusses kann eine Schaltung gemäss Fig. 2 benutzt werden. Diese umfasst den eigentlichen Sensorteil 10 mit dem Heizelement 4 und den Thermoelementen 5, 6, einen Messteil 11 zum Verarbeiten der Signale des Sensorteils 10 und zum Berechnen des Massenflusses, eine optionale Überwachungsschaltung 12, deren Aufgabe weiter unten diskutiert wird, sowie eine Ansteuerung 13 für das Heizelement 4.

Der Messteil 11 umfasst einen Präzisionsverstärker 15, der die Differenz der Temperatursignale der Thermoelemente 5, 6 verstärkt. Das so verstärkte Differenzsignal wird durch einen Analog/Digital-Wandler 16 einem Mikroprozessor 17 zugeführt. Der Mikroprozessor 17 verwendet eine Eichtabelle, um aus dem Differenzsignal den Massenfluss zu bestimmen. Die Aufgabe des Mikroprozessors kann auch vom Wandler 16 übernommen werden, falls letzterer in geeigneter Weise nichtlinear arbeitet.

Der Messteil 11 umfasst ausserdem eine Messsteuerung 18, welche unter anderem die Stromzufuhr zu den Teilen 15 - 17 steuert und deren Aufgaben weiter unten beschrieben werden.

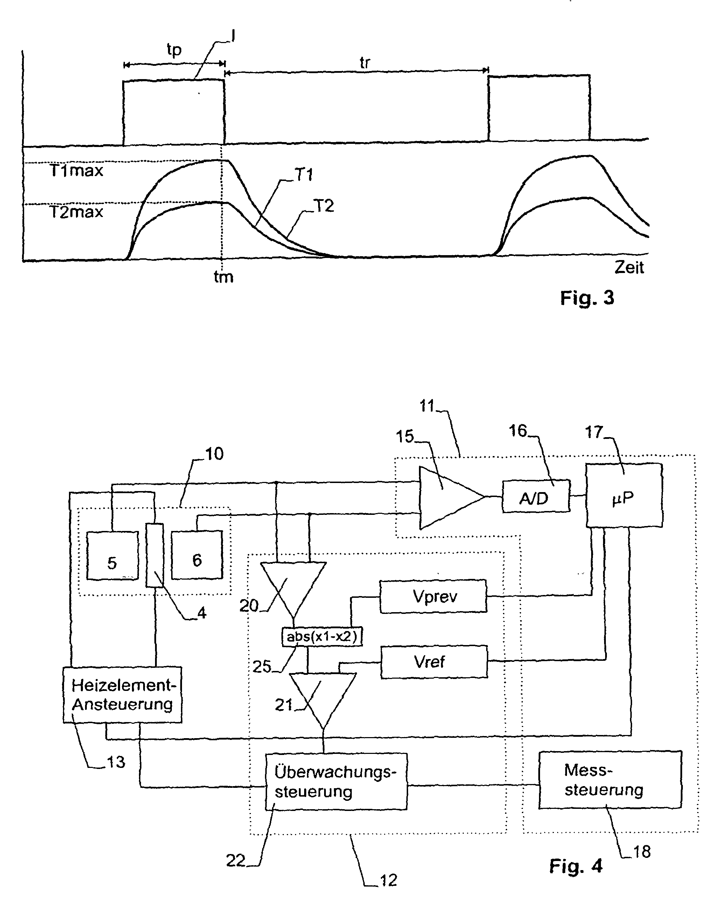

Um den Stromverbrauch gering zu halten, wird das Gerät zyklisch bzw. pulsweise betrieben. Dies ist in Fig. 3 dargestellt.

Der Mikroprozessor 17 oder die Messsteuerung 18 sendet Pulse an die Ansteuerung 13, welche entsprechende Strompulse I einer Länge tp von z.B. 40 ms für das Heizelement 4 erzeugt. Zwischen den Strompulsen wird das Heizelement 4 während Perioden einer Länge tr von z.B. 2 Sekunden nicht (oder nur reduziert) geheizt.

Die Länge tp der Strompulse I ist so gewählt, dass die Temperaturen T1, T2 der Thermoelemente 5, 6 am Ende tm jedes Pulses ihre Gleichgewichtswerte T1max bzw. T2max erreichen. Somit kann der Mikroprozessor zur Zeit tm die Temperaturdifferenz T2max - T1max messen und in konventioneller Weise auswerten.

Thermoelemente sind besser zur Messung der Temperaturpulse geeignet als Widerstände, da Thermoelemente bei pulsweisen Temperaturänderungen weniger zu Drift und Alterung neigen als Widerstände.

Durch diesen pulsweisen Betrieb der Vorrichtung kann der Stromverbrauch des Heizelements 4 beträchtlich gesenkt werden. Um eine gute Stromeinsparung zu erreichen, sollte die Pulslänge tp zumindest fünf mal, vorzugsweise mindestens zehn mal kleiner als die zweite Zykluslänge tr sein.

Um die Leistungsaufnahme weiter zu reduzieren, können verschiedene zusätzliche Massnahmen alternativ oder in Kombination getroffen werden. Diese werden im folgenden beschrieben.

Eine erste Massnahme besteht darin, dass der Sensor zwei Betriebsmodi aufweist, welche von der Messsteuerung 18 oder der Überwachungssteuerung 22 ausgewählt werden. Im ersten Betriebsmodus wird die Länge tp der Pulse z.B. auf 10 ms reduziert und die Messung findet entsprechend früher statt. Die Länge der Pulse reicht in diesem Fall nicht aus, um das thermische Gleichgewicht zu erreichen. Es ist jedoch immer noch möglich, eine Messung leicht reduzierter Genauigkeit durchzuführen. Im zweiten Betriebsmodus wird die volle Pulslänge tp von z.B. 40 ms verwendet.

Die Betriebsmodi werden entweder automatisch ausgewählt (z.B. wird normalerweise der erste Betriebsmodus verwendet, und der zweite Betriebsmodus wird lediglich zur Kalibrierung oder für eine Messung erhöhter Genauigkeit eingesetzt), oder sie können gezielt von aussen angewählt werden.

Ein wichtiger Vorteil dieser ersten Massnahme zur Reduktion der Leistungsaufnahme liegt darin, dass sie im wesentlichen ohne zusätzliche Schaltelemente auskommt.

Zur weiteren Reduktion der Stromaufnahme kann die Auflösung des A/D-Wandlers 16 abhängig vom Betriebsmodus geändert werden. Im ersten Betriebsmodus steht nur wenig Zeit für die Messung zur Verfügung und ausserdem sind die Messresultate weniger genau. Deshalb wird der A/D-Wandler 16 in diesem Betriebsmodus mit reduzierter Auflösung betrieben. Dies beschleunigt die Messung. Zudem wird die Leistungsaufnahme des A/D-Wandlers 16 reduziert. Im zweiten Betriebsmodus wird der A/D-Wandler mit voller Auflösung betrieben.

Eine weitere Massnahme zur Reduktion der Leistungsaufnahme verwendet die bereits erwähnte Überwachungsschaltung 12. Diese besitzt einen Verstärker 20, dessen Ausgangssignal in einem Komparator 21 mit einer Referenzspannung Vref verglichen wird. Die Funktion der Überwachungsschaltung 12 wird von einer Überwachungssteuerung 22 kontrolliert. Die Überwachungssteuerung 22 ist mit der Messsteuerung 18 verbunden und in der Lage, den Messteil 11 ein- und auszuschalten.

Die Überwachungsschaltung 12 erlaubt es, die Vorrichtung in zwei Moden zu betreiben. In einem ersten Modus (Überwachungsmodus) deaktiviert die Überwachungssteuerung 22 den Messteil 11 und die Überwachungsschaltung 12 überwacht den Zustand der Sensoren, wie dies weiter unten beschrieben wird. In einem zweiten Modus (Messmodus) aktiviert die Überwachungssteuerung 22 den Messteil 11, und der Messteil 11 führt die normalen pulsweisen Messungen in der oben beschriebenen Weise durch.

Im Überwachungsmodus übernimmt die Überwachungssteuerung 22 die Kontrolle der Heizelement-Ansteuerung 13 und erzeugt, gleich wie in Fig. 3, kurze Heizpulse, welche zu entsprechenden Temperaturänderungen an den Thermoelementen 5, 6 führen. Die entsprechenden Temperatursignale werden in Verstärker 20 verstärkt und die Temperaturdifferenz T2max - T1max wird in Komparator 21 mit dem Referenzwert Vref verglichen.

Solange die Temperaturdifferenz unter dem Referenzwert Vref bleibt, kann davon ausgegangen werden, dass die Strömungsgeschwindigkeit des zu messenden Mediums so gering ist, dass sie vernachlässigbar ist. Eine genaue Messung kann in diesem Fall unterbleiben und der Messteil 11 braucht nicht aktiviert zu werden. Sobald die Temperaturdifferenz jedoch den Referenzwert Vref übersteigt, so aktiviert die Überwachungssteuerung 22 den Messteil 11, welcher sodann genauere Messungen durchführt.

Die Überwachungsschaltung 12 ist vorzugsweise weitgehend in Analogtechnik und möglichst einfach ausgeführt, wodurch deren Stromverbrauch reduziert werden kann, was aber auch gleichzeitig deren Genauigkeit beschränkt. Vorzugsweise wird deshalb im Überwachungsmodus der Messteil 11 zur Kalibrierung der Überwachungsschaltung periodisch aktiviert, selbst wenn die Temperaturdifferenz unter dem Referenzwert V_{ref} bleibt. In einer derartigen Kalibrierungsphase prüft der Messteil, ob der gemessene Massenfluss unter einer vorgegebenen Schwelle liegt. Falls ja, so wird der Referenzwert Vref um einen Korrekturwert reduziert, falls nein, so wird er entsprechend erhöht.

Dank der Überwachungsschaltung 12 kann der Stromverbrauch der Vorrichtung reduziert werden, da der aufwendige Messteil 11 während Perioden mit niederem Massenfluss ausgeschaltet bleibt. Dies ist insbesondere in Messumgebungen wichtig, in denen der Massenfluss während längerer Perioden gering ist.

In Messumgebungen, in denen mit nur geringen Änderungen des Massenflusses zu rechnen ist, kann eine andere Ausgestaltung der Überwachungsschaltung 12 eingesetzt werden, die in Fig. 4 gezeigt wird. Hier erzeugt der Mikroprozessor 17 zusätzlich zum Referenzwert Vref einen Vergleichswert Vprev. Der Ausgangswert Vout des Verstärkers 20 wird zusammen mit dem Vergleichswert Vprev einer Schaltung 25 zugeführt, welche den Absolutwert der Differenz Vout - Vpref dieser beiden Werte berechnet. Dieser Absolutwert wird nun in Komparator 21 mit dem Referenzwert Vref verglichen.

Die Funktionsweise der Ausführung nach Fig. 4 entspricht jener nach Fig. 2, mit der Ausnahme, dass die Überwachungssteuerung 22 den Messteil 11 aktiviert, sobald das Differenztemperatursignal der beiden Temperatursensoren um einen vorgegebenen Wert vom Vergleichswert Vprev abweicht.

Wenn der Messteil 11 einen Wert gemessen hat, so speichert er das entsprechende Differenzsignal der Temperatursensoren als Vergleichswert Vprev ab. Sodann wird er deaktiviert. Nun misst die Überwachungsschaltung 12 die Abweichung vom Vergleichswert. Sobald diese Abweichung den Referenzwert Vref überschreitet, wird der Messteil 11 erneut aktiviert, um eine nächste Messung durchzuführen und einen neuen Vergleichswert Vprev zu erzeugen. Somit wird der Messteil 11 nur dann aktiviert, wenn sich das Signal geändert hat.

Ausserdem kann auch in dieser Ausführung der Messteil periodisch aktiviert werden, um die Überwachungsschaltung zu kalibrieren und die Werte Vref und Vprev nachzuführen.

Wird in der Ausführung nach Fig. 4 der Vergleichswert Vprev gleich Null gesetzt, so entspricht sie in ihrer Funktionsweise im wesentlichen jener gemäss Fig. 2. Prinzipiell kann die Überwachungsschaltung die Signale der Temperatursensoren auch auf andere oder weitere Schwellbedingungen prüfen als auf jene, die in den Ausführungen nach Fig. 2 bzw. 4 berücksichtigt sind.

In den soweit gezeigten Ausführungen, betreiben sowohl die Überwachungsschaltung 12, als auch der Messteil 11 das Heizelement 4 pulsweise. Es ist jedoch auch denkbar, dass z.B. nur die Überwachungsschaltung 12 einen pulsweisen Betrieb verwendet, während die Messschaltung 11 das Heizelement während ihrer gesamten Aktivierungszeit eingeschaltet lässt. Auch ist es denkbar, dass die Überwachungsschaltung 12 Heizpulse kleinerer Energie verwendet als die Messschaltung, da sie eine geringere Messgenauigkeit benötigt.

Typische Pulslängen tp liegen bei einer Sensorgeometrie gemäss Fig. 1 im Bereich von 15 - 50 ms, wenn abgewartet werden soll, bis sich an den Temperatursensoren ein thermisches Gleichgewicht einstellt. Es ist jedoch auch denkbar, kürzere Pulse hinunter bis zu etwa 1 ms zu verwenden - in diesem Falle können die Gleichgewichtstemperaturen T1max, T2max z.B. durch Extrapolation ermittelt werden.

Vorzugsweise wird das Heizelement zwischen zwei Heizpulsen nicht von einem Strom durchflossen. Es ist jedoch auch denkbar, das Heizelement dauernd mit einer Grundleistung zu betreiben, so dass die Betriebstemperatur schneller erreicht werden kann.

Die Schaltelemente gemäss Fig. 2 bzw. 4 können ganz oder teilweise auf dem Siliziumträger 1 des Bauteils integriert werden. Sie können jedoch auch als externe Komponenten ausgeführt sein.

Während in der vorliegenden Anmeldung bevorzugte Ausführungen der Erfindung beschrieben sind, ist klar darauf hinzuweisen, dass die Erfindung nicht auf diese Beschränkt ist und in auch anderer Weise innerhalb des Umfangs der folgenden Ansprüche ausgeführt werden kann.

## Patentansprüche

1. Verfahren zum Messen des Massenflusses eines Gases oder einer Flüssigkeit, bei welchem das Gas bzw. die Flüssigkeit über einen ersten Temperatursensor (5), ein Heizelement (4) und einen zweiten Temperatursensor (6) geführt und der Massenfluss aus den Temperatursignalen der beiden Temperatursensoren (5, 6) ermittelt wird, **dadurch gekennzeichnet, dass** zur Einsparung von Heizenergie das Heizelement (4) zyklisch betrieben wird, wobei in einer ersten Zyklusphase das Heizelement mit höherer Temperatur betrieben wird als in einer zweiten Zyklusphase, wobei die erste Zyklusphase kürzer als die zweite Zyklusphase ist.

2. Verfahren nach Anspruch 1, **dadurch gekennzeichnet, dass** der Massenfluss aus der Differenz der Temperatursignale der beiden Temperatursensoren (5, 6) ermittelt wird.

3. Verfahren nach einem der vorangehenden Ansprüche, **dadurch gekennzeichnet, dass** die erste Zyklusphase (tp) mindestens zeitweise so lange gewählt wird, dass sich im Bereich der Temperatursensoren (5, 6) ein thermisches Gleichgewicht einstellt.

4. Verfahren nach einem der vorangehenden Ansprüche, **dadurch gekennzeichnet, dass** die Temperatursensoren (5, 6) und das Heizelement (4) zumindest teilweise auf einer dielektrischen Membran (3) angeordnet werden, die auf einer Öffnung oder Vertiefung (2) in einem Halbleiterbauteil (1) angeordnet ist.

5. Verfahren nach einem der vorangehenden Ansprüche, **dadurch gekennzeichnet, dass** zwei unterschiedliche Betriebsmodi vorgesehen werden, wobei im ersten Betriebsmodus Heizpulse einer ersten Länge und im zweiten Betriebsmodus Heizpulse einer zweiten Länge erzeugt werden, wobei die erste Länge kleiner als die zweite Länge ist, und insbesondere wobei die erste Länge so klein ist, dass sich an deren Ende im Bereich der Temperatursensoren (5, 6) kein thermisches Gleichgewicht einstellt.

6. Verfahren nach einem der vorangehenden Ansprüche, **dadurch gekennzeichnet, dass** die erste Zyklusphase mindestens fünf mal, vorzugsweise mindestens zehn mal, kürzer als die zweite Zyklusphase ist.

7. Massenfluss-Sensor zum Ermitteln des Massenflusses eines Gases oder einer Flüssigkeit, insbesondere zur Ausführung des Verfahrens nach einem der vorangehenden Ansprüche, mit zwei in einer Flussrichtung nacheinander angeordneten Temperatursensoren (5, 6), einem zwischen den Temperatursensoren (5, 6) angeordneten Heizelement (4) und mit Messmitteln (11, 12, 13) zum Ermitteln des Massenflusses aus den Temperatursignalen beider Temperatursensoren (5, 6), **dadurch gekennzeichnet, dass** die Messmittel (11, 12, 13) eine Pulssteuerung (17, 22) aufweisen, welche dem Heizelement (4) zur Erzeugung von Wärmepulsen Energie in Pulsen zuführt, wobei ein Abstand (tr) aufeinanderfolgender Pulse länger ist als die Pulse selbst.

8. Sensor nach Anspruch 7, **dadurch gekennzeichnet, dass** die Pulssteuerung (17, 22) derart ausgestaltet ist, dass mindestens ein Teil der Wärmepulse so lange ist, dass sich die Temperatursensoren (5, 6) am Ende eines Wärmepulses im wesentlichen im thermischen Gleichgewicht befinden.

9. Sensor nach einem der Ansprüche 7 oder 8, **dadurch gekennzeichnet, dass** das Heizelement (4) und die Temperatursensoren (5, 6) zumindest teilweise auf einer dielektrischen Membran (3) angeordnet sind, die sich über eine Öffnung oder Vertiefung (2) in einem Halbleiterbauelement (1) erstreckt.

10. Sensor nach einem der Ansprüche 7 - 9, **dadurch gekennzeichnet, dass** die Messmittel eine Überwachungsschaltung (12) und einen von der Überwachungsschaltung (12) aktivierbaren Messteil (11) aufweisen, wobei
der Messteil (11) ausgestaltet ist zur Ermittlung des Massenflusses aufgrund der Temperatursignale, und wobei
die Überwachungsschaltung (12) ausgestaltet ist zur periodischen Überprüfung der Temperatursignale und zum Aktivieren des Messteils (11), falls die Temperatursignale eine vorgegebene Schwellbedingung erfüllen.

11. Sensor nach Anspruch 10, **dadurch gekennzeichnet, dass** der Messteil (11) zur Kalibrierung der Überwachungsschaltung (12) ausgestaltet ist.

12. Sensor nach einem der Ansprüche 7 bis 11, **dadurch gekennzeichnet, dass** die Pulssteuerung (17, 22) in einem ersten Betriebsmodus bei Betrieb der Überwachungsschaltung (12) erste Wärmepulse und bei Betrieb des Messteils (11) zweite Wärmepulse erzeugt, wobei die ersten Wärmepulse kleinere Energie aufweisen als die zweiten Wärmepulse.

13. Sensor nach einem der Ansprüche 10 - 12, **dadurch gekennzeichnet, dass** die Schwellbedingung aus der Abweichung einer Differenz der Temperatursignale von einem vorgegebenen Vergleichswert (0, Vprev) ermittelt wird.

14. Sensor nach einem der Ansprüche 7 - 13, **dadurch gekennzeichnet, dass** die Temperatursensoren (5, 6) im wesentlichen symmetrisch um das Heizelement angeordnet sind.

15. Sensor nach einem der Ansprüche 7 - 14, **dadurch gekennzeichnet, dass** er zwei Betriebsmodi aufweist, wobei er in einem ersten Betriebsmodus Pulse einer ersten Länge und in einem zweiten Betriebsmodus Pulse einer zweiten Länge erzeugt, wobei die erste Länge kleiner als die zweite Länge ist, und insbesondere wobei die erste Länge so klein ist, dass sich an deren Ende im Bereich der Temperatursensoren (5, 6) kein thermisches Gleichgewicht einstellt.

16. Sensor nach Anspruch 15, **dadurch gekennzeichnet, dass** er einen Digital-Analog-Wandler (16) einstellbarer Auflösung aufweist, wobei die Auflösung im ersten Betriebsmodus kleiner eingestellt ist als im zweiten Betriebsmodus.

17. Sensor nach einem der Ansprüche 7 - 16, **dadurch gekennzeichnet, dass** die Temperatursensoren (5, 6) Thermoelemente sind.

## Claims

1. Method for measuring the mass flow of a gas or a liquid, in which the gas or the liquid, respectively, is led over a first temperature sensor (5), a heating element (4) and a second temperature sensor (6), and the mass flow is determined from the temperature signals of the two temperature sensors (5, 6), **characterized in that** for saving heating energy the heating element is operated in cycles, wherein in a first cycle phase the heating element is operated at higher temperature than in a second cycle phase, wherein the first cycle phase is shorter than the second cycle phase.

2. Method of claim 1 **characterized in that** the mass flow is determined from the difference of the temperature signals of the two temperature sensors (5, 6).

3. Method of one of the preceding claims **characterized in that** the first cycle phase (tp) is at least temporarily chosen such long that a thermal equilibrium is reached in the region of the temperature sensors (5, 6).

4. Method of one of the preceding claims **characterized in that** the temperature sensors (5, 6) and the heating element (4) are arranged at least partially on a dielectric membrane (3), which is arranged on an opening or a recess (2) in a semiconductor device (1).

5. Method of one of the preceding claims **characterized in that** two different modes of operation are provided, wherein in the first mode of operation heating pulses of a first length and in the second mode of operation heating pulses of a second length are generated, wherein the first length is smaller than the second length, and in particular wherein the first length is so small that at its end no thermal equilibrium is reached in the region of the temperature sensors (5, 6).

6. Method of one of the preceding claims **characterized in that** the first cycle phase is at least five times, preferably at least ten times shorter than the second cycle phase.

7. Mass flow sensor for determining the mass flow of a gas or a fluid, in particular for carrying out the method of one of the preceding claims, with two temperature sensors (5, 6) arranged in a flow direction one after the other, a heating element (4) arranged between the temperature sensors (5, 6) and with measuring means (11, 12, 13) for determining the mass flow from.the temperature signals of both temperature sensors (5, 6), **characterized in that** the measuring means (11, 12, 13) comprise a pulse control (17, 22) feeding energy in pulses to the heating element (4) for generating heating pulses, wherein a distance (tr) between consecutive pulses is longer than the pulses themselves.

8. Sensor of claim 7 **characterized in that** the pulse control (17, 22) is designed such that at least part of the heating pulses are such long that the temperature sensors (5, 6) are substantially in thermal equilibrium at the end of a heating pulse.

9. Sensor of one of the claims 7 or 8 **characterized in that** the heating element (4) and the temperature sensors (5, 6) are at least partially arranged on a dielectric membrane (3) extending over an opening or recess (2) in a semiconductor device (1).

10. Sensor of one of the claims 7 - 9 **characterized in that** the measuring means comprise a monitoring circuit (12) and a measuring section (11) that can be activated by the monitoring circuit (12), wherein
the measuring section (11) is designed for determining the mass flow depending on the temperature signals, and wherein
the monitoring section (12) is designed for periodically monitoring the temperature signals and for activating the measuring section (11) if the temperature signals fulfil a given threshold condition.

11. Sensor of claim 10 **characterized in that** the measuring section (11) is designed for calibrating the monitoring circuit (12).

12. Sensor of one of the claims 7 to 11 **characterized in that** the pulse control (17, 22) generates, in a first mode of operation, during operation of the monitoring circuit (12), first heating pulses and, during operating of the measuring section (11), second heating pulses, wherein the first heating pulses have less energy than the second heating pulses.

13. Sensor of one of the claims 10 - 12 **characterized in that** the threshold condition is determined from the deviation of a difference of the temperature signals from a given comparison value (0, Vprev).

14. Sensor of one of the claims 7 - 13 **characterized in that** temperature sensors (5, 6) are substantially symmetrically arranged on the sides of the heating element.

15. Sensor of one of the claims 7 - 14 **characterized in that** it comprises two modes of operation, wherein in a first mode of operation pulses of a first length and in a second mode of operation pulses of a second length are generated, wherein the first length is smaller than the second length, and in particular wherein the first length is such small that, at its end, no thermal equilibrium is reached in the region of the temperature sensors (5, 6).

16. Sensor of claim 15 **characterized in that** it comprises a digital analog converter (16) with adjustable resolution, wherein the resolution is set to be smaller in the first mode of operation than in the second mode of operation.

17. Sensor of one of the claims 7 - 16 **characterized in that** the temperature sensors (5, 6) are thermocouples.

## Revendications

1. Procédé pour mesurer le flux massique d'un gaz ou d'un liquide, dans lequel le gaz ou le liquide est guidé sur un premier capteur de température (5), un élément de chauffage (4) et un second capteur de température (6) et le flux massique est établi à partir des signaux de température des deux capteurs de température (5, 6), **caractérisé en ce que** pour économiser de l'énergie de chauffage, l'élément de chauffage (4) fonctionne par cycles, l'élément de chauffage fonctionnant dans une première phase de cycle à une température plus élevée que dans une seconde phase de cycle, la première phase de cycle étant plus courte que la seconde phase de cycle.

2. Procédé selon la revendication 1, **caractérisé en ce que** le flux massique est établi à partir de la différence entre les signaux de température des deux capteurs de température (5, 6).

3. Procédé selon l'une quelconque des revendications précédentes, **caractérisé en ce que** la première phase de cycle (tp) est choisie au moins provisoirement d'une telle longueur qu'un équilibre thermique survient dans la zone des capteurs de température (5, 6).

4. Procédé selon l'une quelconque des revendications précédentes, **caractérisé en ce que** les capteurs de température (5, 6) et l'élément de chauffage (4) sont disposés au moins en partie sur une membrane diélectrique (3) qui est disposée sur une ouverture ou un évidement (2) dans un composant semi-conducteur (1).

5. Procédé selon l'une quelconque des revendications précédentes, **caractérisé en ce que** deux modes différents de fonctionnement sont prévus, dans lequel le premier mode de fonctionnement produit des impulsions de chauffage d'une première longueur et le second mode de fonctionnement produit des impulsions de chauffage d'une seconde longueur, la première longueur étant plus petite que la seconde longueur, et en particulier la première longueur étant si petite qu'à sa fin, il ne survient aucun équilibre thermique dans la zone des capteurs de température (5, 6).

6. Procédé selon l'une quelconque des revendications précédentes, **caractérisé en ce que** la première phase de cycle est au moins cinq fois, de préférence au moins dix fois plus courte que la seconde phase de cycle.

7. Capteur de flux massique destiné établir le flux massique d'un gaz ou d'un liquide, en particulier destiné à l'exécution du procédé selon l'une quelconque des revendications précédentes, avec deux capteurs de température (5, 6) disposés l'un après l'autre dans une direction de flux, avec un élément de chauffage (4) disposé entre les capteurs de température (5, 6) et avec des moyens de mesure (11, 12, 13) pour établir le flux massique à partir des signaux de température des deux capteurs de température (5, 6), **caractérisé en ce que** les moyens de mesure (11, 12, 13) présente une commande d'impulsions (17, 22) qui amène à l'élément de chauffage (4) de l'énergie sous forme d'impulsions pour la production d'impulsions de chaleur, un écart (tr) entre deux impulsions qui se suivent étant plus long que l'impulsion même.

8. Capteur selon la revendication 7, **caractérisé en ce que** la commande d'impulsions (17, 22) est réalisée de telle sorte qu'au moins une partie des impulsions de chaleur soit si longue que les capteurs de température (5, 6) se trouvent pratiquement en équilibre thermique à la fin d'une impulsion de chaleur.

9. Capteur selon l'une quelconque des revendications 7 ou 8, **caractérisé en ce que** l'élément de chauffage (4) et les capteurs de température (5, 6) sont disposés au moins en partie sur une membrane diélectrique (3) qui s'étend sur une ouverture ou évidement (2) dans un composant semi-conducteur.

10. Capteur selon l'une quelconque des revendications 7 à 9, **caractérisé en ce que** les moyens de mesure présentent un circuit de surveillance (12) et une partie de mesure (11) qui peut être activée par le circuit de surveillance (12), dans lequel
la partie de mesure (11) est réalisée dans le but d'établir le flux massique sur la base des signaux de température, et dans lequel
le circuit de surveillance (12) est réalisé pour la vérification périodique des signaux de température et pour l'activation de la partie de mesure (11) dans le cas où les signaux de température satisfont une condition de seuil prédéfinie.

11. Capteur selon la revendication 10, **caractérisé en ce que** la partie de mesure (11) est réalisée dans le but de calibrer le circuit de surveillance (12).

12. Capteur selon l'une quelconque des revendications 7 à 11, **caractérisé en ce que** la commande d'impulsions (17, 22) produit des premières impulsions de chaleur dans un premier mode de fonctionnement lorsque le circuit de surveillance (12) fonctionne, et produit des secondes impulsions de chaleur lorsque la partie de mesure (11) fonctionne, les premières impulsions de chaleur présentant une énergie inférieure aux secondes impulsions de chaleur.

13. Capteur selon l'une quelconque des revendications 10 à 12, **caractérisé en ce que** la condition de seuil est établie à partir de la déviation d'une différence des signaux de température par rapport à une valeur comparative prédéfinie (0, Vprev).

14. Capteur selon l'une quelconque des revendications 7 à 13, **caractérisé en ce que** les capteurs de température (5, 6) sont disposés de manière essentiellement symétrique autour de l'élément de chauffage.

15. Capteur selon l'une quelconque des revendications 7 à 14, **caractérisé en ce qu'**il présente deux modes de fonctionnement, dans lequel sont produites des impulsions d'une première longueur dans un premier mode de fonctionnement et des impulsions d'une seconde longueur dans un second mode de fonctionnement, la première longueur étant plus petite que la seconde longueur, et en particulier la première longueur étant tellement petite qu'il ne survient aucun équilibre thermique à sa fin dans la zone des capteurs de températures (5, 6).

16. Capteur selon la revendication 15, **caractérisé en ce qu'**il présente un convertisseur numérique-analogique (16) à résolution réglable, la résolution dans le premier mode de fonctionnement étant réglée plus petite que celle dans le second mode de fonctionnement.

17. Capteur selon l'une quelconque des revendications 7 à 16, **caractérisé en ce que** les capteurs de température (5, 6) sont des thermocouples.
